# EUROPEAN PATENT SPECIFICATION

(11) **EP 3 772 555 B1**
(45) Date of publication and mention of the grant of the patent: **11.12.2024**
(21) Application number: 20189989.5
(22) Date of filing: 07.08.2020
(51) Int. Cl.: E04B 9/04, E04B 9/00

(54) **ACOUSTIC PANEL SYSTEM, FASTENING ELEMENT, AND METHOD FOR ARRANGING AN ACOUSTIC PANEL SYSTEM ON A WALL OR CEILING SURFACE**
AKUSTIKPLATTENSYSTEM, BEFESTIGUNGSELEMENT UND VERFAHREN ZUR ANORDNUNG EINES AKUSTIKPLATTENSYSTEMS AN EINER WAND- ODER DECKENFLÄCHE
SYSTÈME DE PANNEAU ACOUSTIQUE, ÉLÉMENT DE FIXATION ET PROCÉDÉ POUR DISPOSER UN SYSTÈME DE PANNEAU ACOUSTIQUE SUR UNE SURFACE DE MUR OU DE PLAFOND

(30) Priority: 07.08.2019 DK PA201900933
(43) Date of publication of application: 10.02.2021
(73) Proprietor: Knauf A/S, 9500 Hobro (DK)
(72) Inventor: IPSEN, Erik Flink, 9500 Hobro (DK)
(74) Representative: Budde Schou A/S

(56) References cited:
- EP-A1- 3 138 976
- US-A1- 2010 061 825

## Description

### TECHNICAL FIELD

The present invention relates to an acoustic panel system, a fastening element, and a method for arranging an acoustic panel system on a wall or ceiling surface.

The acoustic panel system according to the present invention provides a worker with an easy-to-install system, which is flexible and can be adapted to various sound absorbing/reflecting properties and at the same time creates architectural details.

### BACKGROUND OF THE INVENTION

When constructing buildings both for private and commercial use, it is commonly known to construct ceilings and walls forming architectural details for aesthetic as well as sound improving reasons within the room.

One example of prior art systems is disclosed in EP 2335916 B1. The referred document discloses an acoustic panel which is constructed as a laminate and comprises a plurality of openings in contact with an intermediate space comprising a sound absorbing material. This panel is however premanufactured, is time consuming to produce, and leaves the installation process with very limited degrees of variation.

Other ceiling/wall systems disclose acoustic panels in which wooden laths are attached to a mounting panel prior to installing the panel to the wall or ceiling, where the laths are fastened to the panels by screws extending from the back of the panel, through the panel and into the laths. It is not desirable to fasten the laths to the mounting panel by screws which are fastened through the laths from a front surface and into the mounting panel, as these screws would be visible to persons inside the room.

Another example of a prior art system is disclosed in EP 3138976 A1. This document describes a strip ceiling system having a number of elongate strips having a part being sized and configured to fit into a longitudinal groove of a sheet.

The above-mentioned systems are all time consuming to construct and install, and therefore costly in terms of labour.

It is an object of the invention to provide an acoustic panel system which is suitable for being mounted to a ceiling/wall surface, where the acoustic panel system is easy to mount and creates a surface having visual and sound improving properties.

The above object and advantages, together with numerous other objects and advantages, which will be evident from the following description of the present invention, are according to a first aspect of the present invention obtained by:
An acoustic panel system for installation on a wall or ceiling surface, the acoustic panel system, comprising:
a mounting plate, suitable for fastening to the wall or ceiling surface, the mounting plate defining a first main surface intended for facing the wall or ceiling surface, and a second main surface being opposite the first main surface and intended for facing the interior of a room;
a number of acoustic elements suitable for fastening to the second main surface;
a number of individual fastening elements, each fastening element intended for fastening one of the acoustic elements to the second surface, the fastening elements comprising a first part intended for fastening to the mounting plate, and a second part intended for fastening to the acoustic elements,
the first part or the second part being arranged with a friction-connecting means, such that the first part or the second part may be connected to the mounting plate or the acoustic elements without the use of any tools,
the mounting plate comprising a plurality of perforations or embossments arranged in consecutive rows, the perforations or embossments being arranged for connection with the first part of the fastening elements.

The mounting plate may come in a variety of embodiments and characteristics. The plate may thus have any desired dimensions and be made of any type of material, such as a wood or a gypsum. The mounting plate may in a further embodiment be manufactured from a sound absorbing material.

The mounting plate is suitable to be fastened to a desired surface of a room and serves as backing for the acoustic elements.

Even though the acoustic panel system is intended for mounting to a wall or ceiling surface, the system is also suitable for use as a partition wall, such as a freestanding partition wall. The mounting plate is manufactured with sufficient structural strength, such that the system is self-supporting.

The fastening elements are preferably manufactured from plastic, but may in a further embodiment be manufactured from materials such as metal, wood, or other materials rendering the fastening elements with sufficient structural strength. The first part of the fastening elements is fastened to the mounting panel, and the second part of the fastening elements is fastened to the acoustic elements. According to the invention, the first part or the second part of the fastening elements is arranged with a friction-connecting means, such that when performing a final step of installation, no tools are needed, and the acoustic elements can be installed in a speedy and simple manner. According to a further embodiment of the first aspect of the invention, the mounting plate comprises a plurality of perforations being arranged alternately and in consecutive rows.

The mounting plates comprise in a preferred embodiment a plurality of perforations, which are arranged in consecutive rows and suitable for receiving the first part of the fastening elements. The mounting plates preferably comprise a relatively high number of perforations, such that the variation of possible connection points for the acoustic elements is high. The acoustic elements may thus be connected to the mounting panels in any desired position, which influences the aesthetic as well as the sound improving properties.

When the acoustic elements are attached to the mounting panel, not all perforations are necessarily used for the connection, and will thus be visible for persons within the room. These perforations also influence the acoustic properties of the system, and in an embodiment where the mounting plate comprises perforations, there may be arranged another layer of sound absorbing material behind the mounting plate, which further enhances the acoustic properties of the system.

According to the first aspect of the invention, the acoustic elements comprise a perforation on an upper side intended for facing the mounting plate, the perforation being arranged for connection with the second part of the fastening elements.

In order to arrange the acoustic element onto the mounting plate in a simple manner, perforations are arranged on an upper side of the acoustic elements which faces the mounting plate. Hereby, there is no need for the worker to make any further arrangements to adapt the elements to the mounting plate.

According to a further embodiment of the first aspect of the invention, the acoustic element is an elongated element, such as a lath, preferably a wooden or plastic lath, the elongated element comprising a plurality of the perforations.

The acoustic elements are in a preferred embodiment composed of elongated elements, such as wooden laths, where these elongated elements are fastened to the mounting plate by a number of fastening elements, such as preferably at least two fastening elements, preferable at either end of the elements, and may be arranged in any desired position on the mounting plate. The acoustic elements are in the most basic embodiment mounted to the mounting panel via only one fastening element. According to a further embodiment of the first aspect of the invention, the acoustic elements comprise a groove on an upper side intended for facing the mounting plate, the groove being arranged for connection with the second part of the fastening elements. According to a further embodiment of the first aspect of the invention, the acoustic elements are elongated elements, such as laths, preferably wooden or plastic laths, and comprise a groove and a perforation on an upper side intended for facing the mounting plate, the groove and perforation being arranged at opposite ends of the elongated elements.

In order to be able to arrange the individual elongated elements in a non-parallel relationship, the elongated elements comprise a longitudinal groove, or at one end, a groove which is suitable to receive the second part of a fastening element. It is hereby possible that an elongated element may span between consecutive rows of perforations such that the perforation aligns with the groove of the elongated element.

According to a further embodiment of the first aspect of the invention, the first part of the fastening elements comprises a threaded portion or friction-engaging means, and the second part of the fastening elements comprises friction-engaging means.

In a preferred embodiment of the invention, the first part of the element comprises a threaded portion, such that the fastening element is screwed, e.g. by a suitable tool, into engagement with the mounting plate, and when performing a final step of installation, the acoustic element is simply pressed by the worker into friction engagement with the mounting plate, such that no tools are needed in this final step, and the installation can be made in a simple and quick manner.

According to a further embodiment of the first aspect of the invention, the second part of the fastening elements comprises a threaded portion, and the first part of the fastening elements comprises friction-engaging means.

In an alternative embodiment, the first part of the fastening elements comprises a threaded portion, and the second part comprises friction-engaging means. Here, the fastening elements will be screwed into engagement with the acoustic elements with a suitable tool and then brought into engagement with the mounting plate by pressing the first part of the fastening elements into engagement with the mounting plate.

According to a further embodiment of the first aspect of the invention, the friction-engaging means comprises a flexible element for engaging an inner surface of the perforations or the embossments.

According to a further embodiment of the first aspect of the invention, the friction-engaging means comprises a number of flexible arms or a substantially circumferential flexible element.

The fastening elements in a preferred embodiment comprise one or more flexible elements for engaging the inner surface of the perforations or the embossments. These flexible elements may be arranged as a number of arms, or as a circumferential element, which, when the element is pushed into engagement with the perforation/embossment, engages the inner surface of the perforations/embossments.

According to a further embodiment of the first aspect of the invention, the fastening elements comprise tool-engaging means arranged between the first and second parts, and/or arranged at an end of the first or second parts.

In order to effectively engage the threaded portion of the fastening elements into the mounting panels or the acoustic elements, the fastening elements comprise tool-engaging means, such as a notch or bolt flange, at one or both ends, and/or a bolt flange arranged between the first part and the second part of the fastening element.

According to a second aspect of the present invention, the above objects and advantages are obtained by:
A method for arranging an acoustic panel system on a wall or a ceiling surface, the method comprising the following steps:
- providing a wall or a ceiling surface;
- providing an acoustic panel system according to the first aspect of the invention;
- fastening a number of fastening elements, comprising a first part having a threaded portion or friction-engaging means, via the first part, to the mounting plate, and fastening a second part of the fastening elements, comprising friction-engaging means, to the acoustic elements, or
- fastening a number of fastening elements, comprising a second part having a threaded portion or friction-engaging means, via the second part, to the acoustic elements, and fastening a first part of the fastening elements, comprising friction-engaging means, to the mounting plate.

According to the above-defined method, it is achieved that the above-mentioned acoustic panel system easily and effective can be installed onto a panel or wall surface.
Fig. 1A is an exploded, perspective view of an acoustic panel system.
Fig. 1B is a perspective view of a blow-up of a fastening element.
Fig. 2 is a perspective sectional view of an acoustic panel system.
Figs. 3A-3C are perspective views of a fastening element.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention, as defined in the appended claims, to those skilled in the art. Like reference numerals refer to like elements throughout. Like elements will thus not be described in detail with respect to the description of each figure.

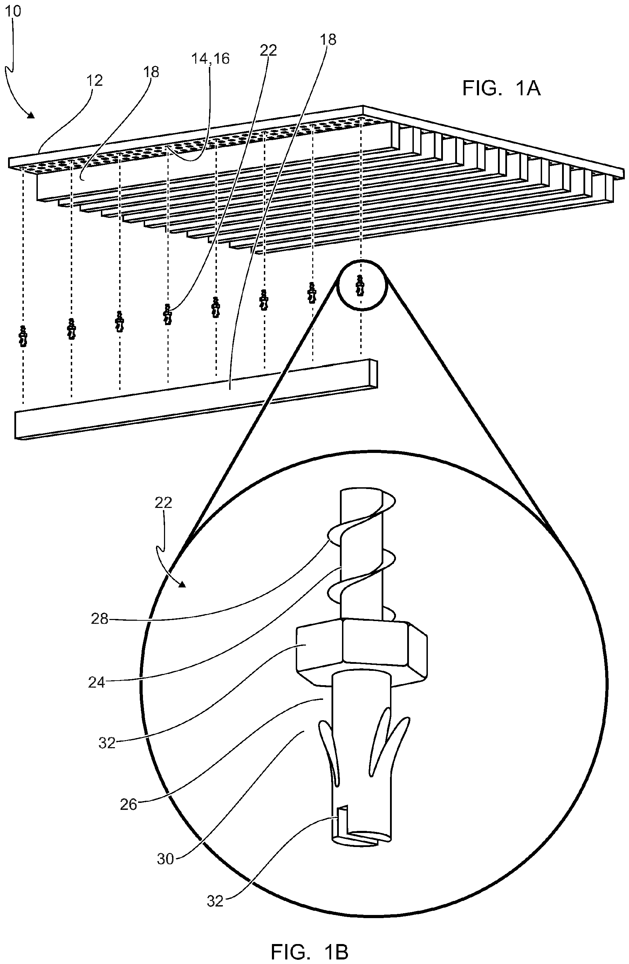

Fig. 1A is an exploded perspective view of an acoustic panel system 10. The acoustic panel system 10 is illustrated in a position mounted onto a ceiling surface (not shown). The acoustic panel system 10 is illustrated with a mounting plate 12 and a plurality of acoustic elements 18, which in the illustrated embodiment, are elongated acoustic elements 18. It is to be understood that a plurality of such acoustic panel systems 10 can be mounted onto the ceiling surface or a wall surface, in side-by-side relationship, such that a larger area of the ceiling or wall surface may be covered.

The mounting plate 12 is preferably manufactured from wood or gypsum, but may also be manufactures from other suitable materials, such as e.g. plastic or thin-walled metal plates. The mounting plate 12 may thus consist of a perforated metal ceiling grid, which is typically used as sound-enhancing or ventilated ceiling panels.

The acoustic elements are in a preferred embodiment produced from wood, such as a wooden lath, but may in an alternative embodiment be produced from different materials known to a person skilled in the art.

The mounting plate 12 comprises a number of perforations 14 and/or embossments 16 arranged in consecutive rows.

The acoustic elements 18 comprise a number of openings 20 which are arranged such that they align with the perforations/embossments 14, 16.

The acoustic elements 18 are mounted to the mounting plate 12 via a number of fastening elements 22. In the illustrated embodiment, eight fastening elements 22 are used; it is however to be understood that any different number of fastening elements 18 can be used, such as fewer of more. In the most basic embodiment, only one fastening element is used.

The fastening elements 22 are arranged for engaging the perforations/embossments 14, 16 and the openings 20 of the acoustic elements respectively.

In order to arrange the acoustic elements 18 onto the mounting plate 12, each fastening element 22 is first mounted to a perforation 14 or embossment 16, and the acoustic elements are then fastened to the fastening elements via a friction connection between the acoustic elements 18 and the fastening means. Each acoustic element 18 is thus arranged onto the mounting plate 12 simply by a worker "pressing" the openings 20 into engagement with the fastening elements.

Fig. 1B is a perspective view of a blow-up of a fastening element 22, and clearly illustrates the fastening element 22 comprising a first part 24 and a second part 26.

The first part 24 is illustrated having a thread 28, such that the fastening element 22 may be screwed into engagement with a perforation 14 or embossment 16 with a suitable tool. The fastening element 22 therefore comprises tool-engaging means 32 arranged at the ends of the fastening element 22 and/or between the first part 24 and the second part 26. The tool-engaging means 32 are illustrated as a notch/bold, but may be arranged in different embodiments according to any desired tool to be used.

The second part 26 of the fastening element 22 is illustrated with friction-connecting means 30, such that when the openings are "pressed" into engagement with the fastening elements 22, the friction-connecting means engages an inner surface of the perforations 14 or embossments 16.

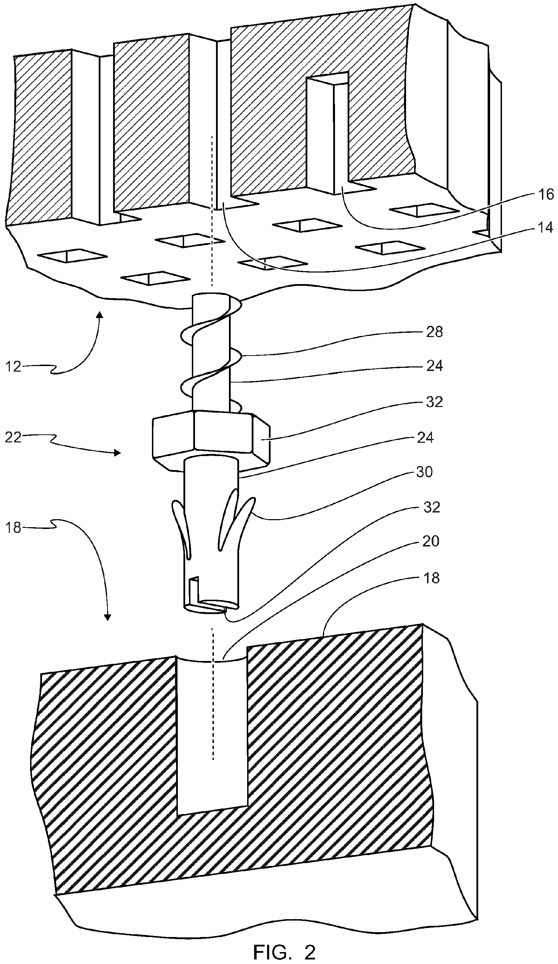

Fig. 2 is a perspective sectional view of an acoustic panel system 10, showing part of a mounting plate 12, part of an acoustic element 18, and a fastening element 22.

The mounting plate is illustrated with a number of perforations 14 and illustrated with one embossment 16 for connection to the thread 28 of the first part 24. The perforations 14 are preferred in a situation where the mounting plate 12 is to be used as a ventilating ceiling panel or as an acoustic mounting plate, and the embossments may be used when there is no desire for ventilation through the mounting plate. The fastening element 22 of the illustrated embodiment may be connected to either the perforations 14 or the embossments 16.

The acoustic element is shown with an opening 20 for connection with the friction-connecting means 30, which in the illustrated embodiment is defined by two flexible arms extending outwards from the fastening element 22, preferably at opposite sides.

It is however to be understood that the fastening element 22 may comprise a different number of flexible arms, such as one, three, four or more, and in an even further embodiment, the fastening element 22 may comprise a substantially circumferential, flexible element. This is particular suitable in an embodiment (not shown and not forming part of the invention) where the acoustic element comprises a longitudinal groove instead of openings. Arranging the acoustic element 18 with a groove, enables the acoustic element 18 to be connected to different consecutive rows of perforations 14 and/or embossments 16. Hereby, the different acoustic elements 18 of the acoustic panel system 10 may be arranged in a non-parallel relationship.

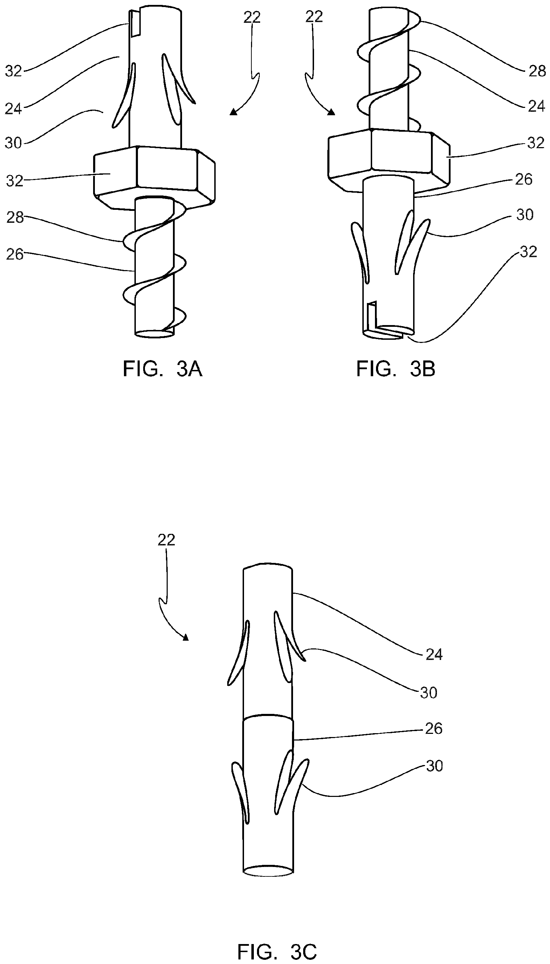

Figs. 3A-3C are perspective views of a fastening element 22. The first part 24 and the second part 26 of the fastening elements may be arranged with different types of fastening means, depending on what type of installation is needed. The first part 24 may thus comprise a thread 28 or a friction-connecting means 30, and the second part 26 may also be arranged with a thread 28 or a friction-connecting means 32. In the embodiment of fig. 3C, the fastening element 22 comprises friction-connecting means 32 on both the first part 24 and the second part 26. Hereby, no tools for connecting the acoustic elements 18 to the mounting plate 12 are needed.

### List of reference numbers

- 10: Acoustic panel system
- 12: Mounting plate
- 14: Perforation
- 16: Embossment
- 18: Acoustic element
- 20: Opening
- 22: Fastening element
- 24: First part
- 26: Second part
- 28: Thread
- 30: Friction-connecting means
- 32: Tool-engaging means

## Claims

1. An acoustic panel system (10) for installation on a wall or ceiling surface, said acoustic panel system (10) comprising:
a mounting plate (12), suitable for fastening to said wall or ceiling surface, said mounting plate (12) defining a first main surface intended for facing said wall or ceiling surface, and a second main surface being opposite said first main surface and intended for facing an interior of a room;
a number of acoustic elements (18) suitable for fastening to said second main surface;
a number of individual fastening elements (22), each fastening element (22) intended for fastening one of said acoustic elements (18) to said second surface, said fastening elements (22) comprising a first part (24) intended for fastening to said mounting plate (12), and a second part (26) intended for fastening to said acoustic elements (18),
said first part (24) or said second part (26) being arranged with a friction-connecting means (30), such that said first part (24) or said second part (26) may be connected to said mounting plate (12) or said acoustic elements (18) without the use of any tools,
said mounting plate (12) comprising a plurality of perforations (14) or embossments (16) arranged in consecutive rows, said perforations (14) or embossments (16) being intended for connection with said first part (24) of said fastening elements (22), and **characterized in that**
said acoustic elements comprise a perforation (14) on an upper side intended for facing said mounting plate (12), said perforation (14) being arranged for connection with said second part (26) of said fastening elements (22).

2. Acoustic panel system (10) according to claim 1, wherein said mounting plate (12) comprises a plurality of perforations (14) being arranged alternately and in consecutive rows.

3. Acoustic panel system (10) according to claim 1, wherein said acoustic element (18) is an elongated element such as a lath, preferably a wooden or plastic lath,
said elongated element comprising a plurality of said perforations (14).

4. Acoustic panel system (10) according to any of claims 1-3, wherein said acoustic elements (18) comprise a groove on an upper side intended for facing said mounting plate (12), said groove being arranged for connection with said second part (26) of said fastening elements (22).

5. Acoustic panel system (10) according to any of claims 1-3, wherein said acoustic elements (18) are elongated elements, such as laths, preferably wooden or plastic laths, and comprise a groove and a perforation (14) on an upper side intended for facing said mounting plate (12), said groove and perforation (14) being arranged at opposite ends of said elongated elements.

6. Acoustic panel system (10) according to any of claims 1-5, wherein said first part (24) of said fastening elements (22) comprises a threaded portion (28) or friction-engaging means (30), and said second part (26) of said fastening elements (22) comprises friction-engaging means (30).

7. Acoustic panel system (10) according to any of claims 1-5, wherein said second part (26) of said fastening elements (22) comprises a threaded portion (28) and said first part (24) of said fastening elements (22) comprises friction-engaging means (30).

8. Acoustic panel system (10) according to claim 6 or 7, wherein said friction-engaging means comprises a flexible element for engaging an inner surface of said perforations (14).

9. Acoustic panel system (10) according to any of claims 6-8, wherein said friction-engaging means (30) comprises a number of flexible arms or a substantially circumferential flexible element.

10. Acoustic panel system (10) according to any of claims 1-9, wherein said fastening elements (22) comprise tool-engaging means (32) arranged between said first and second parts (26), and/or arranged at an end of said first or second parts (26).

11. A method for arranging an acoustic panel system (10) on a wall or a ceiling surface, said method comprising the following steps:
• providing a wall or a ceiling surface;
• providing an acoustic panel system (10) according to any of claims 1-10;
• fastening a number of fastening elements (22) comprising a first part (24) having a threaded portion (28) or friction-engaging means (30), via said first part (24), to said mounting plate (12), and fastening a second part (26) of said fastening elements (22) comprising friction-engaging means (30) to said acoustic elements (18), or
• fastening a number of fastening elements (22) comprising a second part (26) having a threaded portion (28) or friction-engaging means (30), via said second part (26), to said acoustic elements (18), and fastening a first part (24) of said fastening elements (22) comprising friction-engaging means (30) to said mounting plate (12).

## Patentansprüche

1. Akustikplattensystem (10) zur Montage an einer Wand- oder Deckenfläche, wobei das Akustikplattensystem (10) Folgendes umfasst:
eine Montageplatte (12), die zum Befestigen an der Wand- oder Deckfläche geeignet ist, wobei die Montageplatte (12) eine erste Hauptfläche definiert, die dazu bestimmt ist, der Wand- oder Deckfläche zugewandt zu sein, und eine zweite Hauptfläche, die der ersten Hauptfläche gegenüberliegt und dazu bestimmt ist, einem Innenraum zugewandt zu sein;
eine Anzahl von akustischen Elementen (18), die zum Befestigen an der zweiten Hauptfläche geeignet sind;
eine Anzahl von einzelnen Befestigungselementen (22), wobei jedes Befestigungselement (22) zum Befestigen eines der Akustikelemente (18) an der zweiten Fläche vorgesehen ist, wobei die Befestigungselemente (22) einen ersten Teil (24), der zum Befestigen an der Montageplatte (12) vorgesehen ist, und einen zweiten Teil (26), der zum Befestigen an den Akustikelementen (18) vorgesehen ist, umfassen,
wobei der erste Teil (24) oder der zweite Teil (26) mit einem Reibverbindungsmittel (30) derart versehen ist, dass der erste Teil (24) oder der zweite Teil (26) mit der Montageplatte (12) oder den akustischen Elementen (18) ohne Verwendung von Werkzeugen verbunden werden kann,
wobei die Montageplatte (12) eine Vielzahl von in aufeinanderfolgenden Reihen angeordneten Perforationen (14) oder Prägungen (16) umfasst, wobei die Perforationen (14) oder Prägungen (16) für eine Verbindung mit dem ersten Teil (24) der Befestigungselemente (22) vorgesehen sind,
und **dadurch gekennzeichnet, dass** die akustischen Elemente eine Perforation (14) auf einer Oberseite umfassen, die dazu vorgesehen ist, der Montageplatte (12) zugewandt zu sein, wobei die Perforation (14) zur Verbindung mit dem zweiten Teil (26) der Befestigungselemente (22) angeordnet ist.

2. Akustikplattensystem (10) nach Anspruch 1, wobei die Montageplatte (12) eine Vielzahl von Perforationen (14) umfasst, die abwechselnd und in aufeinanderfolgenden Reihen angeordnet sind.

3. Akustikplattensystem (10) nach Anspruch 1, wobei das Akustikelement (18) ein längliches Element wie eine Leiste, vorzugsweise eine Holz- oder Kunststoffleiste, ist,
wobei das längliche Element eine Vielzahl der Perforationen (14) umfasst.

4. Akustikplattensystem (10) nach einem der Ansprüche 1-3, wobei die Akustikelemente (18) eine Nut auf einer Oberseite umfassen, die dazu vorgesehen ist, der Montageplatte (12) zugewandt zu sein, wobei die Nut zur Verbindung mit dem zweiten Teil (26) der Befestigungselemente (22) angeordnet ist.

5. Akustikplattensystem (10) nach einem der Ansprüche 1-3, wobei die Akustikelemente (18) längliche Elemente sind, wie Leisten, vorzugsweise Holz- oder Kunststoffleisten, und eine Nut und eine Perforation (14) auf einer Oberseite umfassen, die dazu vorgesehen ist, der Montageplatte (12) zugewandt zu sein, wobei die Nut und die Perforation (14) an gegenüberliegenden Enden der länglichen Elemente angeordnet sind.

6. Akustikplattensystem (10) nach einem der Ansprüche 1-5, wobei der erste Teil (24) der Befestigungselemente (22) einen Gewindeabschnitt (28) oder ein Reibschlussmittel (30) umfasst und der zweite Teil (26) der Befestigungselemente (22) ein Reibschlussmittel (30) umfasst.

7. Akustikplattensystem (10) nach einem der Ansprüche 1 bis 5, wobei der zweite Teil (26) der Befestigungselemente (22) einen Gewindeabschnitt (28) umfasst und der erste Teil (24) der Befestigungselemente (22) das Reibschlussmittel (30) umfasst.

8. Akustikplattensystem (10) nach Anspruch 6 oder 7, wobei das Reibschlussmittel ein flexibles Element zum Eingreifen in eine Innenfläche der Perforationen (14) umfasst.

9. Akustikplattensystem (10) nach einem der Ansprüche 6-8, wobei das Reibschlussmittel (30) eine Anzahl flexibler Arme oder ein im Wesentlichen in Umfangsrichtung verlaufendes flexibles Element umfasst.

10. Akustikplattensystem (10) nach einem der Ansprüche 1-9, wobei die Befestigungselemente (22) ein Werkzeugeingriffsmittel (32) umfassen, das zwischen dem ersten und dem zweiten Teil (26) angeordnet ist und/oder an einem Ende des ersten oder des zweiten Teils (26) angeordnet ist.

11. Verfahren zum Anordnen eines Akustikplattensystems (10) an einer Wand oder einer Deckenfläche, wobei das Verfahren die folgenden Schritte umfasst:
• Bereitstellen einer Wand oder einer Deckenfläche;
• Bereitstellen eines Akustikplattensystems (10) nach einem der Ansprüche 1-10;
• Befestigen einer Anzahl von Befestigungselementen (22), die einen ersten Teil (24) umfassen, der einen Gewindeabschnitt (28) oder ein Reibschlussmittel (30) aufweist, über den ersten Teil (24) an der Montageplatte (12), und Befestigen eines zweiten Teils (26) der Befestigungselemente (22), die ein Reibschlussmittel (30) umfassen, an den akustischen Elementen (18), oder
• Befestigen einer Anzahl von Befestigungselementen (22), die einen zweiten Teil (26) umfassen, der einen Gewindeabschnitt (28) oder ein Reibschlussmittel (30) aufweist, über den zweiten Teil (26) an den akustischen Elementen (18), und Befestigen eines ersten Teils (24) der Befestigungselemente (22), die ein Reibschlussmittel (30) umfassen, an der Montageplatte (12).

## Revendications

1. Système de panneau acoustique (10) destiné à être installé sur une surface de mur ou de plafond, ledit système de panneau acoustique (10) comprenant :
une plaque de montage (12), adaptée pour être fixée à ladite surface de mur ou de plafond, ladite plaque de montage (12) définissant une première surface principale prévue pour être orientée vers ladite surface du mur ou du plafond, et une seconde surface principale opposée à ladite première surface principale et prévue pour être orientée vers l'intérieur d'une pièce ;
un certain nombre d'éléments acoustiques (18) qui peuvent être fixés sur ladite seconde surface principale ;
un certain nombre d'éléments de fixation individuels (22), chaque élément de fixation (22) étant destiné à fixer l'un desdits éléments acoustiques (18) à ladite seconde surface, lesdits éléments de fixation (22) comprenant une première partie (24) destinée à être fixée à ladite plaque de montage (12), et une seconde partie (26) destinée à être fixée auxdits éléments acoustiques (18),
ladite première partie (24) ou ladite seconde partie (26) est disposée avec un moyen de fixation par friction (30), de sorte que ladite première partie (24) ou ladite seconde partie (26) peut être connectée à ladite plaque de montage (12) ou aux éléments acoustiques (18 ) sans l'utilisation des outils,
ladite plaque de montage (12) comprenant une pluralité de perforations (14) ou de reliefs (16) disposés en rangées consécutives, lesdites perforations (14) ou reliefs (16) étant destinés à être reliés à ladite première partie (24) desdits éléments de fixation (22),
et **caractérisé en ce que** lesdits éléments acoustiques comprennent une perforation (14) sur un côté supérieur destiné à faire face à ladite plaque de montage (12), ladite perforation (14) étant disposée pour une connexion avec ladite seconde partie (26) desdits éléments de fixation (22).

2. Système de panneau acoustique (10) selon la revendication 1, dans lequel ladite plaque de montage (12) comprend plusieurs perforations (14) disposées en alternance et en rangées consécutives.

3. Système de panneau acoustique (10) selon la revendication 1, dans lequel ledit élément acoustique (18) est un élément allongé tel qu'une latte, de préférence une latte en bois ou en plastique,
ledit élément allongé comprenant plusieurs desdites perforations (14) .

4. Système de panneau acoustique (10) selon l'une quelconque des revendications 1 à 3, dans lequel lesdits éléments acoustiques (18) comprennent une rainure sur un côté supérieur destiné à faire face à ladite plaque de montage (12), ladite rainure étant disposée pour la connexion avec ladite deuxième partie (26) desdits éléments de fixation (22).

5. Système de panneau acoustique (10) selon l'une quelconque des revendications 1 à 3, dans lequel lesdits éléments acoustiques (18) sont des éléments allongés, tels que des lattes, de préférence des lattes en bois ou en plastique, comprenant une rainure et une perforation (14) sur un côté supérieur destiné à faire face à ladite plaque de montage (12), ladite rainure et perforation (14) étant disposées aux extrémités opposées desdits éléments allongés.

6. Système de panneau acoustique (10) selon l'une quelconque des revendications 1 à 5, dans lequel ladite première partie (24) desdits éléments de fixation (22) comprend une partie filetée (28) ou des moyens de connexion par friction (30), et ladite seconde partie (26) desdits éléments de fixation (22) comprend des moyens de connexion par friction (30).

7. Système de panneau acoustique (10) selon l'une quelconque des revendications 1 à 5, dans lequel ladite seconde partie (26) desdits éléments de fixation (22) comprend une partie filetée (28) et ladite première partie (24) desdits éléments de fixation (22) comprend des moyens de connexion par friction (30).

8. Système de panneau acoustique (10) selon la revendication 6 ou 7, dans lequel ladite connexion par friction comprend un élément flexible destiné à entrer en contact avec la surface intérieure desdites perforations (14 ).

9. Système de panneau acoustique (10) selon l'une quelconque des revendications 6 à 8, dans lequel ladite connexion par friction (30) comprend un certain nombre de bras flexibles ou un élément flexible sensiblement circonférentiel.

10. Système de panneau acoustique (10) selon l'une quelconque des revendications 1 à 9, dans lequel lesdits éléments de fixation (22) comprennent des connexions permettant la fixation avec des outils (32) disposées entre la première et la seconde partie (26), et/ou disposées à une extrémité de la première ou de la seconde partie (26).

11. Procédé de disposition d'un système de panneau acoustique (10) sur une surface de mur ou de plafond, ledit procédé comprenant les étapes suivantes :
• fourniture d'une surface de mur ou de plafond ;
• fourniture d'un système de panneau acoustique (10) selon l'une quelconque des revendications 1 à 10 ;
• fixation d'un certain nombre d'éléments de fixation (22) comprenant une première partie (24) ayant une partie filetée (28) ou des moyens de connexion par friction (30), via ladite première partie (24), à ladite plaque de montage (12), et fixation d'une seconde partie (26) desdits éléments de fixation (22) comprenant des moyens de connexion par friction (30) auxdits éléments acoustiques (18), ou
• fixation d'un certain nombre d'éléments de fixation (22) comprenant une seconde partie (26) dotée d'une partie filetée (28) ou d'un moyen de connexion par friction (30), via ladite seconde partie (26), auxdits éléments acoustiques (18), et fixation d'une première partie (24) desdits éléments de fixation (22) comprenant un moyen de connexion par friction (30) à ladite plaque de montage (12).
